Europäisches Patentamt

European Patent Office

Office européen des brevets

(19)

(11) Numéro de publication: **0 402 552**
**A1**

## (12) ·DEMANDE DE BREVET EUROPEEN

(21) Numéro de dépôt: **89600012.2**

(51) Int. Cl.⁵: **H02G 13/00**

(22) Date de dépôt: **12.06.89**

(43) Date de publication de la demande:
**19.12.90 Bulletin 90/51**

(84) Etats contractants désignés:
**DE NL**

(71) Demandeur: **Pappas, Panagiotis Th.**
**Markopulioti 26**
**GR-11744 Athens(GR)**

(72) Inventeur: **Pappas, Panagiotis Th.**
**Markopulioti 26**
**GR-11744 Athens(GR)**

(54) **Paratonnère d'ionisation élevée et convertisseur de haute tension oscillatoire.**

(57) L'invention se réfère à un paratonnerre à pointe (type Franclin) qui produite une ionisation beaucoup plus grande que celui à simple ou plusieurs pointes. L' ionisation ne se produit pas par une radiation des matières radioactives qui provoquent des effects défavorables à l' environement, comme les paratonnerres usuels d' ionisation radioactive, mais par l'énergie même du champ du mauvais temps, ou encore,par l' aide d' une source électrique additionelle, en développent a son extremité ou extremités, une tension électrique plus grande que la tension initiale du champs du mauvais temps. Le changement de tension s' effectue principalement avec la négative caracteristique résistance dynamique d' arc de plasma, en combinaison d' une géometrie convenable, ainsi que des éléments inductives et capacitants.

ΣΧΗΜΑ 1
FIG. 1

EP 0 402 552 A1

## Paratonnerre d'ionisation élevée et convertisseur de haute tention oscillatoire.

L'invention se référe à un paratonnerre à pointe (type Franclin),qui produit une beacoup plus grande ionisation que celui à simple ou plusieurs pointes.Les parratonnerres à pointes ou de type Franclin fonctionnent avec l'ionisation que les extrémités aigues des pointes provoquent par l'intensité du champ éxistant du mauvais temps.En théorie ,plus aigue est l'extrémité de la pointe ,plus élevée est l'intensité du champ en volt,mésurée par mètre à l'endroit de la pointe pour une différence de potentiel entre le sol et l'atmosphère .Ainsi,l'ionisation de l'air est créée à l'endroit de la pointe et par conséquent la conductivité de la pointe peut conduire à la chute de la résistance de l'air,au long d'une cannelure,entre celle-ci et l'atmosphère;c'est à dire il y a une grande possibilité de provoquer la foudre entre la pointe et l'atmosphère,en géneral;(la tonnerre peut être produite non seulement par les nuages mais aussi entre l'air et le sol).Ainsi pour avoir un plus grand resultat avec un paratonnerre usuel,il semble être nécessaire l'augmentation de l'acuité de la pointe ou du nombre des pointes ou de tous les deux.Néanmoins ,l'augmentation de l'acuité réduit son surface de contact avec l'air et ainsi le courant de conductivité est limité.L'augmentation du nombre des pointes fait grandir l'influence de chaque pointe,Statistiquement ,un grand nombre de pointes tend à se comporter ,plus ou moins,comme la surface lisse qui les entourent.En outre la dissémination du courant conductible par plusieurs pointes ne contribue pas à 1a chute de la résistance de l'atmosphère .Ainsi ,par l'augmentation de l'acuité ou du nombre des pointes ,nous obtenons un comportement concurrentiel ,qui ne permet pas l'amélioration des paratonnerres usuels.

Une amélioration des paratonnerres usuels a été proposée par le physisien hongrois L.Szillard le 1914 (à voir ,référence 2),en plaçant,auprès de l'extrémité de la point ,des matières radioactives qui ionisent l'air. Malgrè le fait que on a pas observé aucune différence essentielle et que aucune étude scientifique n'a pas démontré la supériorité des paratonneres radioactifs (à voir ,référence 3),ces derniers ont été largement répandus. Ce resultat décevant est du ,d'une part à la relativement petite ionisation provoquée par les matières radioactives et d'autre part à l'expansion conductible de la pointe -masse conductible -qui à cause de son expansion ne provoque pas une grande itensité de volt par mètre produite par la différence de potentiel du champ du mauvais temps et de manière contraire à celui que l'extrémité aigue de la pointe provoque elle-même.A la non-rentabilité du paratonnerre nucléaire d'ionisation,il doit y être ajoutée la pollution radioactive, ainsi que le danger menaçant de pollution pendant la chute de la foudre sur le paratonnerre.En effet,on a observé qu'une partie importante du courant de la tonnerre passe inévitablement,à cause de son ionisation,par la matière radioactive.qui se répand irrémediablement à l'environement.

La présente invention a pour objectif de présenter tous les avantages d'un paratonnerre usuel d'ionisation et obtenir une amélioration importante de leur rentabilité ,en évitant leurs désavantages comme ,créer des problèmes à l'environement ou des parasites électromagnétiques et beaucoup plus d'intercalations de celles que le champ de mauvais temps crée.Ces résultats sont obtenus de la manière suivante:

Nous plaçons transversalement au conducteur qui porte la pointe du paratonnerre et vers l'endroit de la pointe ,un collecteur (disque métallique)de 50 cm de diamètre et à une distance d'un ou plusieurs diamètres de la pointe,de sorte que la acuité de la pointe ne soit pas réduite et par conséquent ni l'intensité du courant en volt par mètre .Le disque a pour but d'être chargé .à l'augmentation de l'intensité du champ du mauvais temps,de courant inductif.Au dessous du disque métallique ,le conducteur du paratonnerre s'arrête et il est dirigé,d'une part vers la cathode d'un scintillateur portant cable de diamètre moyen et d'autre part vers la cathode d'un espace libre (gap) dont le cable présente les mêmes prescriptions que le cable du conducteur du paratonnerre.L'anode de l'espace libre (gap) se trouvent de 0,5 à 1mm éloignée du conducteur et il est rélié avec lui avec les mêmes préscriptions de résistance.L'espace libre (gap)sert comme un paratonnerre usuel,c'est à dire à conduire le courant du tonnerre vers le sol.Le scintillateur comporte la cathode et l'anodeet il est enveloppé de gaz spécial (ex.helium).L'anode du scintillateur est plat et sa distance dépend de la nature et de la pression du gaz et elle est de l'ordre de 1/10 du mm de la cathode dont la forme est aigue.La distance du scintillateur est réglée de sorte qu'il puisse produire ignition d'arc d'une tention plus petite que la tention demandée pour l'ignition d'arc à l'espace vide (gap).L'anode du scintillateur se joint à la bobine de self-inductance L,de l'ordre de 200 Henry et de la même résistance ohmique R.de sorte que la constante L/R de la bobine dure plus que quelques secondes.De cette manière,la bobine se comporte comme source de courant stable pendant un temps de l'ordre de L/R.En outre,nous plaçons parallèlement à la bobine un condensateur de l'ordre de 200 pf et d'une résistance diélectrique de quelques dixièmes de kVolts ou on utilise la capacité des parasites de la bobine qui doit être de l'ordre de 200 pf.L'autre extrémité de la bobine se joint à la cathode du paratonnerre.Le scintillateur est placé ,autant que possible ,auprès de la bobine ,de sorte que les lignes magnétiques coupent verticalement le courant de l'arc dans le scintillateur.

A cause de l'influence du champs de mauvais temps et particulièrement à cause de l'alternation des champs qui existent avant les foudres à un endroit (à voir référence 1),le disque métallique du paratonnerre se charge,par induction ou à cause de la conductivité,par une pointe de paratonnerre ou par son raccord avec un feeder électrique,si cela est disponible (à voir plus bas).Ensuite,la cathode du scintillateur qui sert comme pointe d'un petit modèle de paratonnerre raccordé en serie par raport au paratonnerre initial,ionise et provoque ,au moyen de plasma d'air qui se trouve à l'endroit du petit scintillateur ,l'ignition d'arc.Ainsi l'impédancedynamique de l'arc (à voir la référence 4),aidée par le champ magnétique transversal qui se produit par la bobine et fair dévier l'arc en parallèle à l'anode,coupe la conductivité de la bougie .La bobine,qui fonctionne comme une source stable de courant charge,après l'interruption du courant au circuit causée par l'instabilité du scintillateur condensateur,qui se trouve en parallèle avec la bobine ,avec quelques milliers de volt.Après une période de répos du scintillateur qui dure de 10 à 50 ms et à l'influence du fort chargement du condensateur il peut se produire une nouvelle conductivité de l'arc qui transporte la charge instantanée du condensateur chargé,à l'extrémité de la pointe du paratonnerre.La pointe du paratonnerre produit de la forte ionisation et la charge se perd dans l'atmosphère,en ionisant l'endroit ambiant.Le chargement du disque se répéte de la même manière par le champ du mauvais temps ou par le raccordement direct avecla source extérieure;toute la procédure se répéte de la même manière,en produisant de l'ionisation forte autour de la pointe principale du paratonnerre.Le fonctionnement provoqué, seulement par le champ du mauvais temps se fait ,pour autant qu' ils existent les conditions d'un champ foudroyant qui dure quelques minutes . La procédure susmentionnée peut fonctionner sans le champ du mauvais temps ,pour autant que nous joignons au disque par rap port au sol, une tention continue de 500 à 1000 volt et au moyen d'un self-inducted choke d'une grande isolation.La mise en fonctionnement du paratonnerre ne doit pas être continue ,par conséquent il faut placer un détecteur de champ du mauvais temps en combinaison avec un interrupteur de la tention alimentée. En cas où à cause de la forte ionisation, une foudre tombe sur le paratonnerre,l'augmentation du courant ne se fait pas au moyen de la bobine et du petit scintillateur mis en série,mais au de l'espace vide (gap) du parratonnere.En cas. où le champ du mauvais temps est fort et l'ionisation s'étend jusqu' à l'espace vide (gap),nous pouvons avoir ignition de l'arc ,dans l'espace vide (gap)du paratonne-re.C'est pour cette raison que l'espace vide (gap) se place auprès de l'axe du paratonnerre et que nous donnons une forme adéquate à son anode et cathode ,de sorte qu'il fonctionne,par l'influence du champ magnétique de la bobine ,comme le petit scintillateur. Le mécanisme du petit scintillateur de l'espace vide (gap),ainsi que d'autres accessoires se placent dans un cône conductible et imperméable ,qui ,par sa partie inférieure ,permet le passage libre et sans contact du paratonnerre;en même temps il fonctionne comme scintillateur de sûreté entre le cône et la cathode.

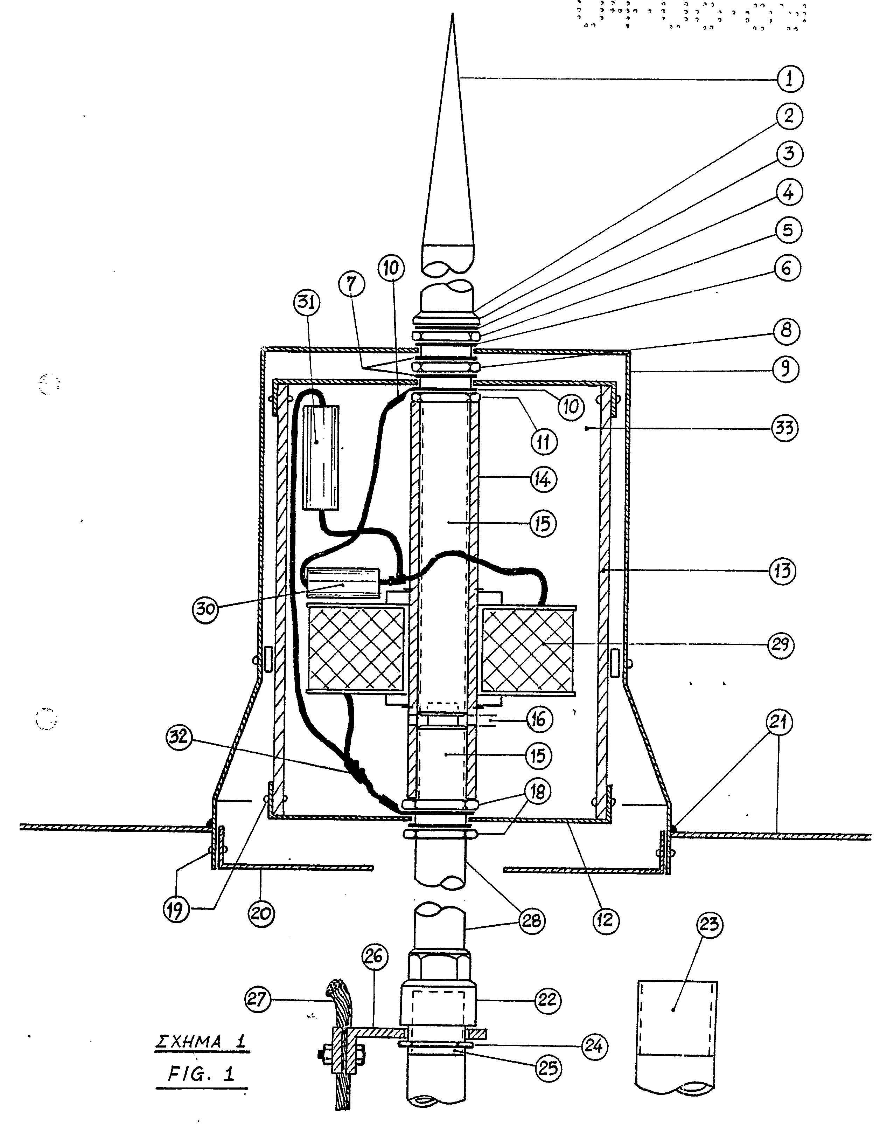

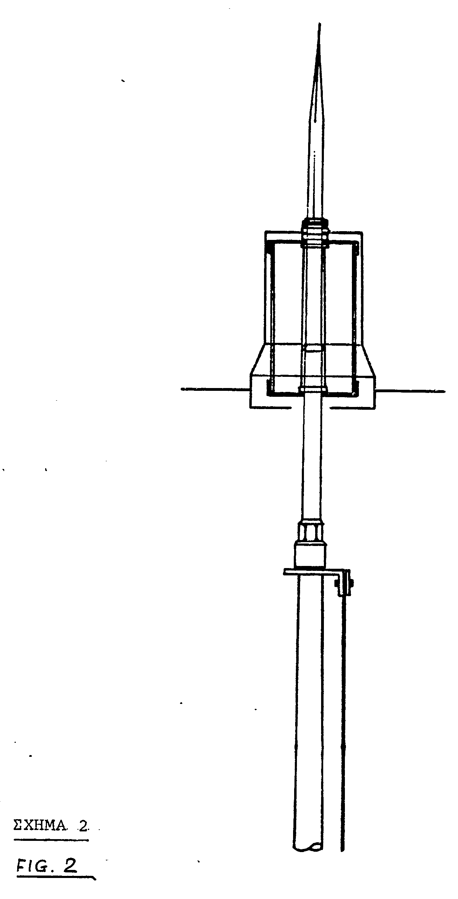

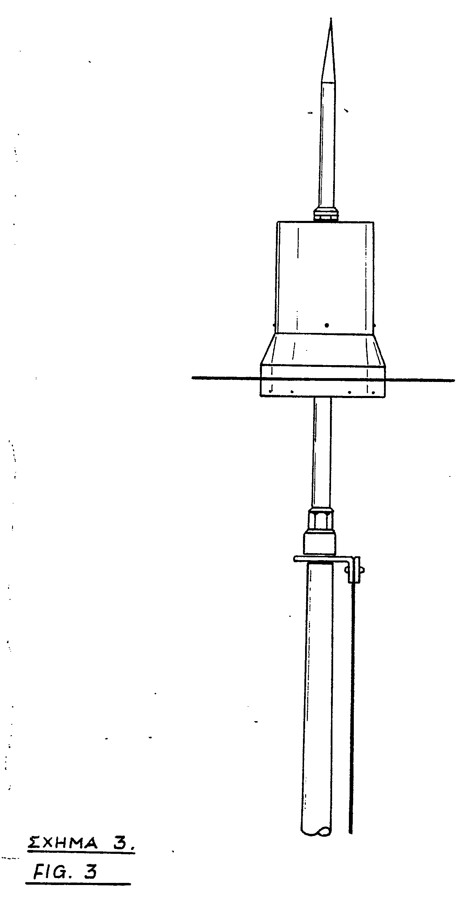

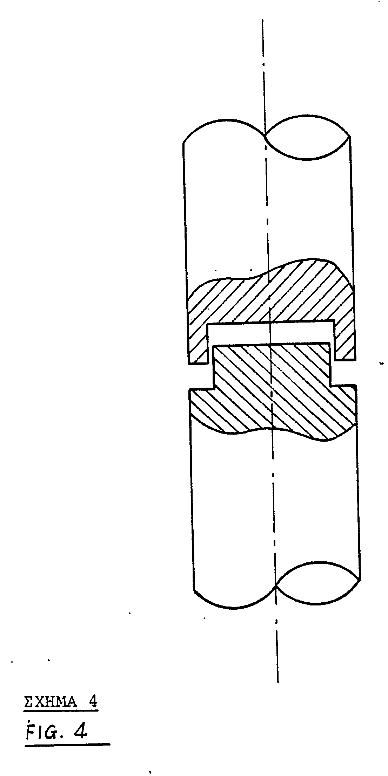

Il suivra une seule réalisation de l'invention. Au dessin 1 nous apercevons les différentes parties du paratonnerre.

A. Parties mécaniques:

(1) pointe du paratonnerre DIN 488082 et conducteur principal DIN48801.(2) Soudre du conducteur principal par un électrode innoxidable portant une rodelle (3) ((4) rodelle en caoutchouc (5)écrou de fixation (6) rodelle de fixation (7)-rodelles de fixation (8)écrou intérieur de fixation ,(9) cage extérieure d'isolation en aluminium fondu qui porte le collecteur 25.(10)rodelle de fixation et de contact électrique du conducteur supérieur avec les parties électroniques du convertisseur.(11)écrou intérieur de fixation. (12) couvercle pressé possédant un trou au milieu pour le passage de l'axe.(13) Tuyau -isolateur PVC,qui offre de la place pour la conservation des accessoires électroniques du convertisseur,(14)tuyau teflon destiné à isoler le conducteur principal du paratonnerre de l'endroit des aaccessoires électroniques du convertisseur.-(15)conducteurs du paratonnerre ayant de filetages .(16)ouvertures d'expansion et espace vide (gap)-d'arc entre les conducteurs (inférieur et supérieur) du paratonnerre.(17)rodelle intérieure à contact électrique et rodelle extérieure.(18) écroux de fixation ,(19) couvercle inférieure et vis de fixation,((20) couvercle inférieur-extérieur ,scintillateur de sûrêté et vis de fixation,(21) disque collecteur,inducteur et soudure de fixation,(22)tuyau de communication hexagonal et en bronze pour la fixation du conducteur inférieur 28 sur le tuyau de fixation 25.(23) filetage de tuyau de fixation pour l'application du tuyau de communication 22.(24)écrou pour le serrement du connecteur de la cathode 26.(27)-cathode en cuivre vers la prise de terre DIN 48852S,(28) conducteur inférieur du paratonnerre DIN 48801 ayant le filetage de fixation sur le tuyau de communication 22.(33)remplissage d'isolation ,non-explosif.

B. Les parties électriques du paratonnerre:

(29) bobine self -inducted raccordé ,d'une part à la rodelle de contact (10) et d'autre part au petit scintillateur 30.(30) scintillateur dont la direction de l'arc est verticale par rapport aux lignes magnétiques de la bobine 29 (plus ou moins vrticale à l'axe de la bobine 29).(31) condensateur rélié parallèlement à la bobine.(32) raccordement du petit scintillateur avec la bobine 29 et la rodelle intérieure de contact 17.

Au dessin 2 nous présentons une coupe verticale du paratonnerre et de la chambre du convertisseur .Au dessin 3 nous présentons la vue extérieure du paratonnerre.Au dessin 4 nous présentons en forme géométrique l'espace vide (gap) 16 qui sert à la production d'arc verticalement aux lignes magnétiques de la bobine.La caractéristique de la forme géométrique est que les distances des surfaces verticales sont plus grandes de cellesdes surfaces horizontales.

Les essais aux laboratoires ,selon le modèle décrit,qui a été rélié à une source extérieure de tention ,ont fait apparaître que:

La tention de la source extérieure a été plus ou moins 800 volt et elle était réliée entre le conducteur supérieur du paratonnerre qui porte la pointe et du conducteur inférieur rélié avec le conducteur de la cathode ,au moyen d'une bobine self-inducted 6 Henry et 100 Hm .Au-dessus de la pointe du paratonnerre on a placé un électrode de 40000 volt de tention, par rapport à la pointe et à 4 ou 5 cm loin d'elle,et qui correspond à une tention moyen de l'ordre de 1000000 volt à chaque mètre ,sans donner d'étincelle,alors que la tention de 800 volt a resté fermée. Le raccordement de la tention de 800 volt et l'activation du paratonnerre provoquaient ,entre la pointe et l'électrode de 40000 volt ,étincelle à une distance plus que 10cm ,c'est à dire à une distance plus que double de celle qui aurait été réalisée sans l'activation du paratonnerre.

A raison de comparaison ,les mêmes essais ont été effectués avec un paratonnerre nucléaire,type PROTECTOR qui fonctionne avec de l'àmericium 241,1000 mcurie,corpuscules a de tention et auquel le fabriquant confère une portée qui peut arriver jusqu'à 100 m.Les essais ont été effectués avec les sources radioactives couvertes et découvertes.Au deuxième cas ,on a augmenté l'étincelle de 4cm à 6-7cm,c'est à dire ,nous avons une augmentation de 1,5 fois de la longeur de l'étincelle.Vus les avantages qui découlent de la concentration de l'ionisation de la nature,la rentabilité de ce modèle est nettement plus élevée que celle du paratonnerre nucléaire de double imntensité.Formelement ,le rayon de la portée d'un tel paratonnerre,les marges de sécurité respectées,peut être pour le moindre égal au rayon apparent de portée d'un paratonnerre nuclèaire de 2000mcurie ,corpuscules a.

Le présent paratonnerre présente plus d'avantages que les paratonnerres nucléaires en rendant plus d'ionisation àl'extrémité de la pointe,de sorte que des conditions adéquates soient produites pour provoquer la chute de la résistance de l'air.Il ne pollue pas l'environnement et il présente une beaucoup plus grande portée et rentabilité que les paratonnerres nucléaires.Le paratonnerre principal ne comporte pas de circuits actifs et pour autant que il soit entretenu contre la corrosion ,il n'y a pas de risque de tomber en panne.En outre ,le paratonnerre de ce type qui est fourni d'une source extérieure d'énergie électrique servant à son fonctionnement suplémentaire,ne dépend pas du bon fonctionnement de la source électrique,et par conséquent il peut fonctionner de manière satisfaisante dans le cas aussi d'interruption de l'énergie électrique fournie,en se mettant automatiquement en fonctionnement par le champ même du mauvais temps.Ce paratonnerre présente plus d'avantages de fonctionnement que tous les autres paratonnerres d'ionisation.En accord avec la théorie électromagnétique usuelle,des désavantages et des dangers découlent seulement par la radiation électromagnétique du courant de la foudre tout au long de sa cannelure conductible.L'augmentation fort élevée du courant électrique ,au long de son conducteur , est une source de forte oscilation électromagnétique.A voir la référence 1.Ce problème se résout seulement par l'étude et la mode d'instalation.Nous ne nous occuperons plus de la radiation puisque le présent paratonnerre ne présente pas ce genre de problèmes.Nous pouvon se référer ,à titre indicatif pour résoudre le problème de la radiation ,à la combinaison d'un mécanisme d'extinction ou au paratonnerre d'extinction -ce qui est la combinaison idéale pour la protection contre les tonnerres-à voir référence 1.

Références

1.P.Th.Pappas ,kéravnika fénomena kai archés synchronis antikeravnikis prostassias,éditions chryssi seira ,Athina 1987.

2. H. Baatz ,Radioactive Isotope verbbersern nicht den Blitzschutz,Elektrotech,Z.93,101-104,1972.

3. R.H.Golde,Lightning Conductor,Lightning,Academic Press ,1977.

4. F.A. Maxfield and R.R.Benedict,Theory of Gaseous Conduction and electronics,McGraw-Hill,NY,1941.

## Revendications

1. Le paratonnerre d' ionisation élevée comporte un paratonnerre usuel avec pointe porteur d' un disque collecteur - indicateur et convetisseur de production de haute ténsion d' ionisation produite par l' instastabilité d' arc, au moyen du champ magnetique ou de l' instabilité physique de l' arc même (phénomènes d' instabilité de pinch et de résistance négative etc.) ou de combinaison de tout cela. Une autre caractéristique est le raccordement en serie du scintillateur avec la bobine et le condensateur ou seulement avec la bobine d' une capacité intérieure adequable de parasites; l'alimentation du paratonnerre se fait indépendament, soit par le champ du mauvais temps soit par l' alimenteur séparé de tension élecctrique.

2. Le convertisseur de production de haute tension oscillatoire peut être offert à tout usage. Il est décrit plus haut et il peut être alimenté de n' importe quelle manière (par le champ du mauvais temps, par l' alimenteur électrique, par la génératrice électrique, par l' élément électrique etc. ou par combinaison). C' est pour cela que nous demandons la protection, non seulement du paratonnerre, mais du convertisseur aussi.

ΣΧΗΜΑ 1
FIG. 1

ΣΧΗΜΑ 2

FIG. 2

ΣΧΗΜΑ 3.

FIG. 3

ΣXHMA 4

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-139575 (HELITA) <br> * page 3, ligne 20 - page 4, ligne 7 * <br> * page 5, ligne 7 - page 7, ligne 11; revendications 1-3; figures 2, 5, 6 * <br> ----- | 1, 2 | H02G13/00 |

**DOMAINES TECHNIQUES RECHERCHES (Int. Cl.5 )**

H02G

Le présent rapport a été établi pour toutes les revendications

| Lieu de la recherche | Date d'achèvement de la recherche | Examinateur |
|---|---|---|
| LA HAYE | 25 JANVIER 1990 | RIEUTORT A.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................Numero........................
& : membre de la même famille, document correspondant

EPO FORM 1503 03.82 (P0402)